(19) Europäisches Patentamt / European Patent Office / Office européen des brevets

(11) **EP 1 108 603 B1**

(12) **EUROPÄISCHE PATENTSCHRIFT**

(45) Veröffentlichungstag und Bekanntmachung des Hinweises auf die Patenterteilung:
**08.10.2008 Patentblatt 2008/41**

(51) Int Cl.:
*B60K 31/00* *(2006.01)*    *G01S 13/93* *(2006.01)*
*G05D 1/02* *(2006.01)*    *G01C 21/16* *(2006.01)*

(21) Anmeldenummer: **00125311.1**

(22) Anmeldetag: **29.11.2000**

(54) **Verfahren zur vorausschauenden Bestimmung eines Fahrkorridors eines Kraftfahrzeuges**

Method for defining a corridor containing the predicted path of a vehicle

Procédé pour la prédiction et délimitation d'un trajet pour un véhicule

(84) Benannte Vertragsstaaten:
**DE FR GB**

(30) Priorität: **14.12.1999 DE 19960100**
**16.02.2000 DE 10006855**

(43) Veröffentlichungstag der Anmeldung:
**20.06.2001 Patentblatt 2001/25**

(73) Patentinhaber: **Continental Automotive GmbH**
**30165 Hannover (DE)**

(72) Erfinder:
• **Ding, Matthias**
**65779 Kelkheim (DE)**
• **Heinrichs-Bartscher, Sascha**
**56075 Koblenz (DE)**

(56) Entgegenhaltungen:
EP-A- 0 899 543    EP-A- 1 318 491
WO-A-99/10193    WO-A-99/10747
DE-A- 19 749 306

**Beschreibung**

Die Erfindung betrifft ein Verfahren zur vorausschauenden Bestimmung eines Fahrkorridors eines Kraftfahrzeuges für ein automatisches Abstandsregel- und -kontrollsystem, bei welchem der zukünftige Fahrkorridor aus den Radgeschwindigkeiten der Fahrzeugräder einer Achse des Kraftfahrzeuges ermittelt wird.

Aus der DE 197 49 306 A1 ist ein Verfahren zur vorausschauenden Bestimmung eines Fahrkorridors eines Kraftfahrzeuges bekannt. Dabei wird die Gierrate des Fahrzeuges bestimmt und der Kurvenradius für jedes Fahrzeugrad einer Achse als Quotient aus der Radgeschwindigkeit und der ermittelten Gierrate ermittelt. Mit Hilfe dieses Fahrkorridors wird festgestellt, welche Position das Fahrzeug nach Ablauf eines vorgegebenen Zeitraumes einnehmen wird und welche vorausfahrenden Fahrzeuge oder Hindernisse sich im Fahrkorridor des eigenen Fahrzeuges aufhalten. Aus den, von einem Abstandssensor detektierten Objekten ermittelt das Abstandsregelsystem das Objekt, auf welches der Abstand des zu regelnden Fahrzeuges eingestellt wird.

Die Radgeschwindigkeit wird dabei aus den Raddrehzahlen bestimmt, welche jeweils an einem Rad einer Achse gemessen werden. Für eine exakte Bestimmung des zukünftigen Fahrschlauches des Fahrzeuges muss der Reifendurchmesser der beiden Räder, welche für diese Messung herangezogen werden, exakt gleich sein. Unterschiedliche Reifendurchmesser der Räder bewirken, dass der berechnete Fahrkorridor nicht mit dem tatsächlich vom Fahrzeug gefahrenen Fahrkorridor übereinstimmt. So kann es vorkommen, dass bei einer Geradeausfahrt des Fahrzeuges der berechnete Fahrkorridor nicht geradeaus zeigt.

Die gattungsbildende Offenlegungsschrift WO 99/10747 offenbart ein Verfahren zur genauen Bestimmung der Geschwindigkeit eines umlaufenden Bauteiles, wobei aus der tatsächlichen Verteilung der Unstetigkeiten am umlaufenden Bauteil ein Korrekturwert bestimmt wird, mit welchem eine korrigierte Geschwindigkeit ermittelt wird.

Der Erfindung liegt somit die Aufgabe zugrunde, ein Verfahren zur vorausschauenden Bestimmung eines Fahrkorridors des Kraftfahrzeuges anzugeben, bei welchem mit Hilfe der Raddrehzahlen der berechnete Fahrkorridor dem tatsächlichen Fahrkorridor entspricht, welches das Fahrzeug in der Zukunft befahren wird.

Erfindungsgemäß wird die Aufgabe durch die Merkmale des Anspruchs 1 gelöst. Dabei ist vorgesehen, dass vor Bestimmung des Fahrkorridors mindestens die Radgeschwindigkeit eines Fahrzeugrades mit einem veränderlichen Reifenkorrekturfaktor beaufschlagt wird. Aufgrund des automatischen Radabgleichs wird dieser Korrekturfaktor in vorgegebenen Zeitabständen neu berechnet und nachgeführt.

Weiter werden zur Bestimmung des Korrekturfaktors die Radgeschwindigkeiten der Räder der Achse über eine vorgegebene Wegstrecke ermittelt und aus den so gebildeten Radgeschwindigkeiten der beiden Räder ein Quotient gebildet. Mit Hilfe des Geschwindigkeitsquotienten, welcher entweder mit Hilfe der Räder der angetriebenen Achse oder der nicht angetriebenen Achse bestimmt wird, ist eine Bewertung des Streckenverlaufes des Fahrzeuges einfach möglich. Dabei ist hervorzuheben, dass die Beurteilung des Streckenverlaufes unabhängig von der Fahrgeschwindigkeit des Kraftfahrzeuges erfolgt.

Mit Hilfe des erfindungsgemäßen Verfahrens können alle Effekte eliminiert werden, die zu unterschiedlichen Reifendurchmessern führen. Dies können verschiedene Reifeninnendrücke oder unterschiedliche Profiltiefen der Reifen sein. Aber auch die Verwendung unterschiedlicher Reifen wie z.B. eines normalen und eines Notrades haben Auswirkungen auf den zu berechnenden Fahrkorridor.

Da der Korrekturfaktor im Laufe eines Fahrzyklus des Kraftfahrzeuges ständig neu bestimmt wird, ist somit eine einfache und vorteilhafte Anpassung des mit Hilfe des veränderlichen Reifenkorrekturfaktors bestimmten Fahrkorridors an den tatsächlichen Fahrkorridor des Kraftfahrzeuges möglich.

Vorteilhafterweise werden die Radgeschwindigkeiten beider zu einer Achse gehörenden Fahrzeugräder mit dem Reifenkorrekturfaktor beaufschlagt.

Um den Fahrkorridor exakt bestimmen zu können, wird der Reifenkorrekturfaktor nur bei annähernder Geradeausfahrt des Kraftfahrzeuges bestimmt.

In einer Ausgestaltung werden mehrere über einen bestimmten Zeitraum ermittelte Quotienten hinsichtlich der Häufigkeit des Auftretens ähnlicher Werte der Quotienten überprüft, wobei die Anzahl der Quotienten mit jeweils einem ähnlichen Wert gezählt und in einer Häufigkeitsverteilung abgespeichert werden. Durch die Vielzahl von Quotienten, die zur Bestimmung des Fahrkorridors herangezogen werden, ist eine statistische Aussage über den Fahrkorridor möglich, so dass mit großer Sicherheit der zukünftige Fahrkorridor des Kraftfahrzeuges errechnet werden kann.

Nach Beendigung eines Fahrzyklus des Kraftfahrzeuges wird der zuletzt ermittelte Korrekturfaktor abgespeichert und zu Beginn eines neuen Fahrzyklus die Häufigkeitsverteilung aus dem abgespeicherten Korrekturwert neu ermittelt, wobei der abgespeicherte Korrekturwert und die neu ermittelte Häufigkeitsverteilung zur Bestimmung der Radgeschwindigkeiten der Räder verwendet werden. Somit ist sichergestellt, dass auch in Anfahrsituation des Kraftfahrzeuges der Fahrkorridor bestimmt werden kann, obwohl au dem laufenden Fahrzyklus noch nicht genügend Quotienten ermittelt werden konnte.

Um den Reifenkorrekturfaktor ständig aktualisieren zu können, wird nach Bestimmung einer vorgegebenen Anzahl von Quotienten die Anzahl des Quotienten mit dem kleinsten Wert oder die Anzahl des Quotienten mit dem größten Wert zahlenmäßig verändert.

Ein besonders genauer Reifenkorrekturfaktor ergibt sich, wenn die Anzahl des Quotienten mit dem kleinsten Wert und die Anzahl des Quotienten mit dem größten Wert abwechselnd um den gleichen Wert verringert werden.

Aus den in der Häufigkeitsverteilung gespeicherten Quotienten ein Mittelwert gebildet wird, wobei dieser mit einem Grenzwert verglichen wird, und bei Unterschreitung des Grenzwertes auf eine annähernde Geradeausfahrt des Fahrzeuges erkannt wird.

Um bei der Verwendung von Drehzahlsensoren zur Bestimmung von Radgeschwindigkeiten ein ausreichendes sicheres Ergebnis zu haben, wird der Reifenkorrekturfaktor nur bei einer Fahrzeuggeschwindigkeit berechnet, welche größer ist als ein Fahrzeuggeschwindigkeitsschwellwert.

Die Erfindung läßt zahlreiche Ausführungsformen zu. Eine davon soll anhand der in der Zeichnung dargestellten Figuren näher erläutert werden.

Es zeigt:

Fig. 1:    Geschwindigkeits- und Abstandsregelsystem,

Fig. 2:    Anordnung zur Bestimmung des Fahrkorridors über die Radgeschwindigkeit,

Fig. 3:    Häufigkeitsverteilung

Gleiche Merkmale sind mit gleichen Bezugszeichen gekennzeichnet.

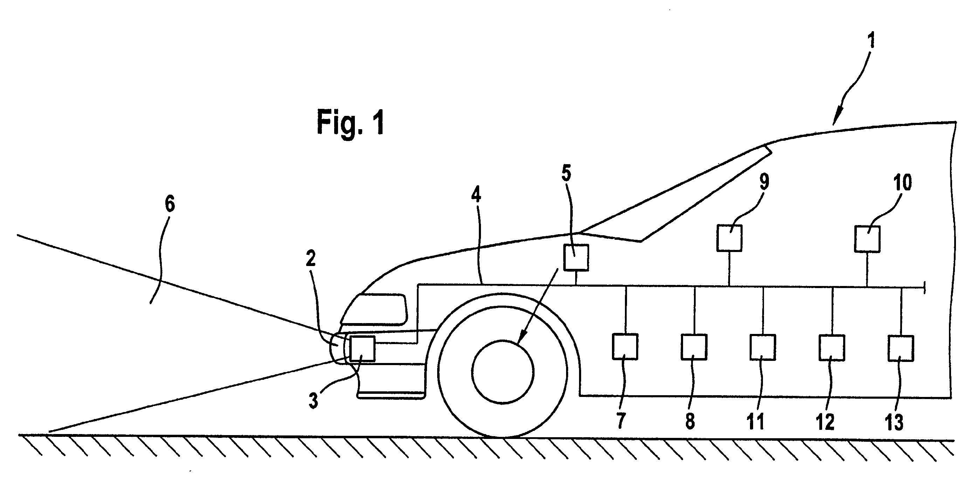

In der Figur 1 ist an dem Stoßfänger 2 eines Kraftfahrzeuges 1 ein automatisches Geschwindigkeits- und Abstandsregelsystem 3 zur Einhaltung des Sicherheitsabstandes von Fahrzeugen angeordnet, welches in einem Gehäuse einen Radarsensor, eine Signalauswerteschaltung und die Abstandsregeleinrichtung enthält.

Vorausfahrende Fahrzeuge oder andere Hindernisse werden durch den Sensorstrahl 6 des Radarsensors 16 erfaßt. Über ein im Fahrzeug 1 vorhandenes Bussystem ist das automatische Geschwindigkeits- und Abstandsregelsystem 3 beispielsweise mit der Motorsteuerung 5, einem Getriebe 7 und einer Bremse 8 verbunden. Elektronische Befehle, welche von der automatischen Geschwindigkeits- und Abstandsregelung 3 erzeugt werden, regulieren automatisch die Geschwindigkeit und somit den Abstand des geregelten Fahrzeuges 1 zu einem vorausfahrenden, langsameren Fahrzeug. Darüber hinaus ist ein Bedienelement 9 mit dem Bussystem 4 verbunden, welches vom Fahrer betätigt wird und seinen Wünschen entsprechende Signale hinsichtlich der Geschwindigkeit, bzw. der Abstandsregelung eingibt. Die Drehzahlen der einzelnen Fahrzeugräder werden durch an das Bussystem 4 angeschlossene Drehzahlsensoren 10, 11,12, 13 detektiert.

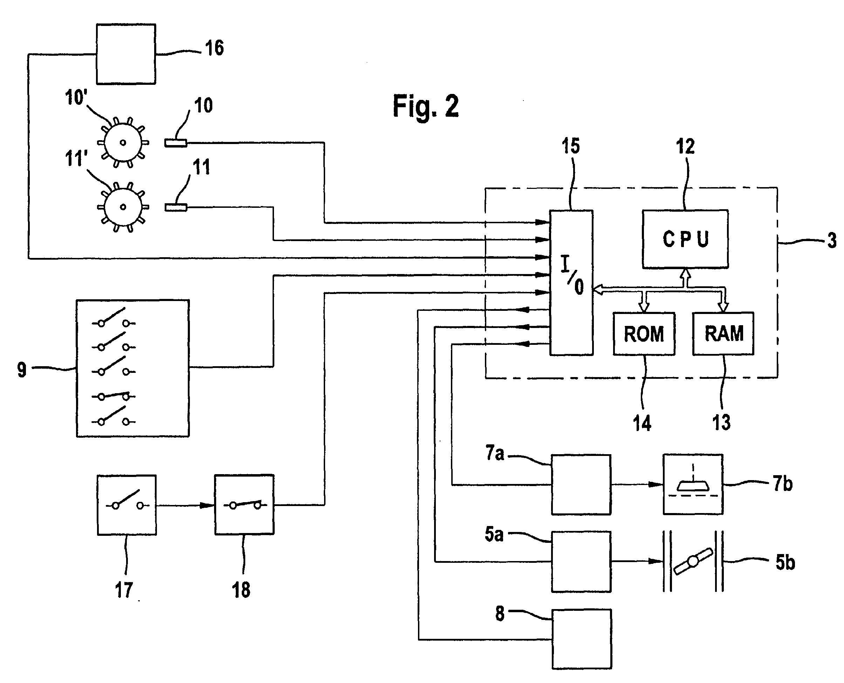

Wie aus Fig. 2 ersichtlich, bestehen die Drehzahlsensoren aus Inkrementscheiben 10' bzw. 11', die an den jeweils beiden nicht weiter dargestellten Vorderrädern des Kraftfahrzeuges angeordnet sind. Diese Inkrementscheiben 10', 11' werden durch Radsensoren 10, 11, die den Inkrementscheiben 10 und 11' gegenüberliegend angeordnet sind, hinsichtlich der Drehzahl abgetastet. Die Drehzahlsignale werden, wie bereits erläutert, dem Abstands- und Regelsystem 3 zugeführt. Dieses besteht aus einem leistungsstarken Mikrorechner, welcher aus einer zentralen Recheneinheit 12, einem Arbeitsspeicher 13, einem Festwertspeicher 4 sowie einer Ein- und Ausgabeeinheit 15 aufgebaut ist. An die Ein-/Ausgabeeinheit 15 sind neben den Drehzahlsensoren 10 und 11 außerdem der Radarsensor 16 sowie das Bedienelement 9 angeschlossen. Die Radsensoren 10, 11 können Induktivgeber oder Hallsensoren sein.

Der Mikroprozessor 12 berechnet aus den vom Radarsensor 6 gelieferten Signalen (Abstandssignal und Relativgeschwindigkeitssignal) sowie der Eigengeschwindigkeit des zu regelnden Fahrzeuges die Geschwindigkeitsdifferenz zwischen beiden Fahrzeugen und ermittelt aus diesen den sicheren Mindestabstand. Ist vom Fahrer der Abstandsbetrieb eingeschaltet, wird der Abstand zum vorausfahrenden Fahrzeug automatisch auf einen wählbaren Abstand eingeregelt. Per Tastendruck auf den Bedienschalter 9 wird eine gewünschte Geschwindigkeit und/oder der gewünschte Abstand eingestellt und gespeichert und vom System aufrechterhalten.

Bei Annäherung an ein langsameres Fahrzeug übernimmt die Abstandsregelung 3 durch automatisches Schließen der Drosselklappe 5b eine Verringerung der Fahrzeuggeschwindigkeit und regelt so den eingestellten Sollabstand zum vorausfahrenden Fahrzeug. Dabei ist der Sollabstand immer gleich/größer dem gesetzlich vorgegebenen Sicherheitsabstand. Neben dem automatischen Schließen der Drosselklappe 5b ist auch ein Einwirken auf die Bremse 7b und/oder eine Ansteuerung der Getriebesteuerung 8 zur Verringerung der Fahrzeuggeschwindigkeit möglich. Ist die Fahrspur wieder frei, beschleunigt der Abstandsregler 3 das Fahrzeug auf die eingestellte Maximalgeschwindigkeit. Bei einer Fahrzeugvorausfahrt ist immer die Abstandsregelung aktiv.

Darüber hinaus ist das Geschwindigkeits- und Abstandsregelsystem 3 mit Schaltern der Fahrzeugbremse 17 bzw. der Fahrzeugkupplung 18 verbunden. Werden diese vom Fahrer über das Kupplungs- und Bremspedal betätigt, bewirken sie im Normalfall ein Abschalten der Abstandsregelung.

Das erfindungsgemäße Verfahren zur Bestimmung des Korrekturfaktors arbeitet wie folgt:

Anhand der von den Drehzahlsensoren 10, 11 gelieferten Impulse ermittelt die CPU 12 die jeweilige Geschwindigkeit eines Rades. Für die Bestimmung des voraussichtlichen Fahrkorridors müssen immer die Radgeschwindigkeit der Räder einer Achse vorgenommen werden. Dies können sowohl die Räder der angetriebenen oder die Räder der nicht angetriebenen Achse sein. Nach Einschalten der Klemme 15 wird ein im ROM 14 gespeicherter Korrekturfaktor in den Arbeitsspeicher 13 des Mikroprozessors eingelesen. Der Mikroprozessor ermittelt aus dem abgespeicherten Korrekturfaktor eine Häufigkeitsverteilung, welche symmetrisch um den gespeicherten Korrekturfaktor verläuft.

Bei einer Fahrzeuggeschwindigkeit größer als 10 km/h (z.B. 35 km/h) wird der Korrekturfaktor des laufenden Fahrzyklusses des Fahrzeuges bestimmt. Dabei wird aus den Raddrehzahlen, welche die Radsensoren 10 und 11 liefern, die jeweilige Geschwindigkeit des rechten bzw. linken Rades einer Achse bestimmt. Beide Radgeschwindigkeiten $V_R$ und $V_L$ werden ins Verhältnis gesetzt und bilden den Korrekturfaktor Q.

$$Q_i = V_L/V_R$$

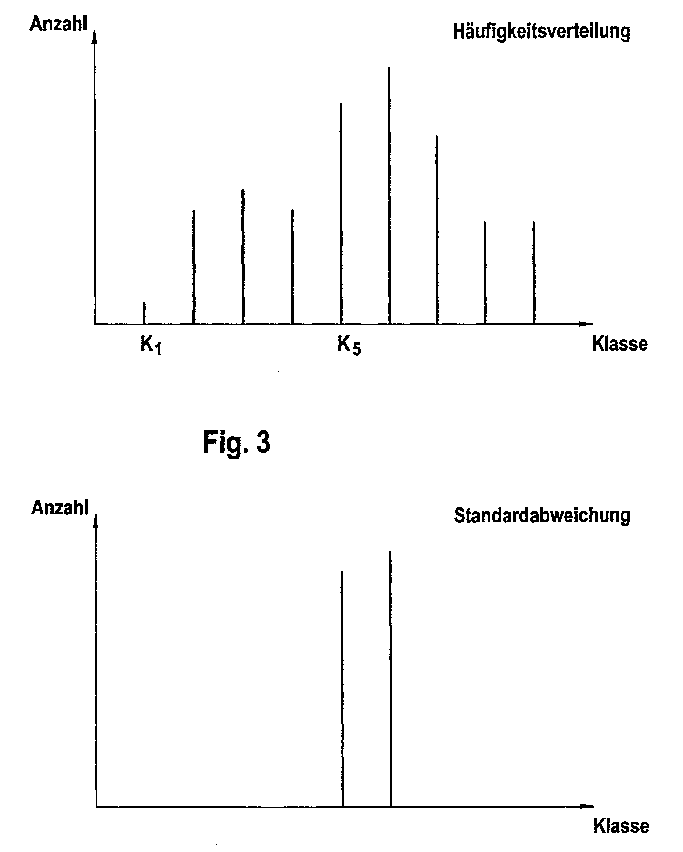

Anschließend wird der so ermittelte Korrekturfaktor $Q_i$ in eine Häufigkeitsverteilung eingetragen. Diese Häufigkeitsverteilung weist verschiedene Klassen K1 bis Kn auf. Jede Klasse repräsentiert dabei die Anzahl von Korrekturfaktoren $Q_i$, bei welchen annähernd dieselbe Geschwindigkeit gemessen wurde. Dabei bildet $K_1$ die Anzahl der Korrekturfaktoren mit dem niedrigsten Wert, während $K_n$ den Korrekturfaktor mit dem höchsten Wert kennzeichnet. In Fig. 3 ist eine solche Verteilung dargestellt.

Zur Beurteilung des Streckenverlaufes, unabhängig von der Fahrgeschwindigkeit des Fahrzeuges, wird über eine festgelegte Wegstecke die Radgeschwindigkeit von rechts und von links gemittelt und der Quotient aus den Werten Geschwindigkeit $V_R$ durch Geschwindigkeit $V_L$ gebildet.

Wurden in der Häufigkeitsverteilung bereits eine vorgegebene Anzahl von Werten in den Klassen der Häufigkeitsverteilung abgelegt, so wird abwechselnd von der kleinsten bzw. der größten belegten Klasse der Häufigkeitsverteilung die Anzahl der in diesen Klassen abgelegten Qotienten um 1 dekrementiert.

Danach wird aus den Geschwindigkeitskoeffizienten Q der Mittelwert gebildet, welcher als aktueller Reifenkorrekturfaktor zur Bestimmung der Geschwindigkeit des rechten Rades multipliziert wird.

Die Berechnung des Korrekturfaktors erfolgt aber nur, wenn mit Hilfe der aus dem Mittelwert bestimmten Standortabweichung eingeschätzt wurde, dass der Streckenverlauf durch Geraden oder lange Kurven gekennzeichnet ist. Ist dies der Fall, umfasst die Standardabweichung in den meisten Fällen weniger als 3 Klassen.

Im Gegensatz dazu, zeigt sich bei Durchfahrten von Ortschaften mit engen und kurzen Kurven ein deutlicher Anstieg der Standardabweichung, die dann 6 oder 7 Klassen aufweist. In diesem Falle wird auf die Aktualisierung des Korrekturfaktors verzichtet, weil durch zahlreiche Lenkbewegungen eine zuverlässige Bestimmung nicht möglich ist.

Mit Hilfe der so korrigierten Geschwindigkeit des rechten Rades wird nun sowohl für das rechte Rad einer Achse als auch für das linke Rad derselben Achse der Kurvenradius bestimmt. $R_R = V_R/G$ und $R_L = V_L/G$, wobei G die Gierrate des Fahrzeuges ist, die mittels Gierratensensors bestimmt wurde. Der mit Hilfe des Kurvenradiusses ermittelte Fahrschlauch hat dabei mindestens die Breite des Abstandes zwischen den beiden Rädern, kann aber auch breiter sein.

Aufgrund der mit Hilfsmitteln aus der Statistik wie Standardabweichung, Mittelwert und Verteilung bestimmte Korrekturfaktor ist ein automatischer Radabgleich mit gegebenen Reifendurchmesser möglich, so dass der Fahrschlauch sicher bestimmbar ist.

**Patentansprüche**

1. Verfahren zur vorausschauenden Bestimmung eines Fahrkorridors eines Kraftfahrzeuges für ein automatisches Abstandsregel- und -kontrollsystem, bei welchem der zukünftige Fahrkorridor aus den Radgeschwindigkeiten der Fahrzeugräder einer Achse des Kraftfahrzeuges ermittelt wird, wobei vor Bestimmung des Fahrkorridors mindestens die Radgeschwindigkeit eines Fahrzeugrades mit einem veränderlichen Reifenkorrekturfaktor beaufschlagt wird, **dadurch gekennzeichnet, dass** zur Bestimmung des Korrekturfaktors die Radgeschwindigkeiten der Räder der Achse über eine vorgegebene Wegstrecke ermittelt werden und aus den so gebildeten Radgeschwindigkeiten der Räder ein Quotient gebildet wird.

2. Verfahren nach Anspruch 1, **dadurch gekennzeichnet, dass** der Reifenkorrekturfaktor nur bei annähernder Geradeausfahrt des Kraftfahrzeuges bestimmt wird.

3. Verfahren nach Anspruch 1 oder 2, **dadurch gekennzeichnet, dass** mehrere über einen bestimmen Zeitraum ermittelte Quotienten hinsichtlich der Häufigkeit des Auftretens ähnlicher Werte der Quotienten überprüft werden, wobei die Anzahl der Quotienten mit jeweils einem ähnlichen Wert gezählt und in einer Häufigkeitsverteilung abgespeichert werden.

4. Verfahren nach Anspruch 3, **dadurch gekennzeichnet, dass** nach Beendigung eines neuen Fahrzyklus die Häufigkeitsverteilung aus dem abgespeicherten Korrekturwert ermittelt wird, wobei der abgespeicherte Korrekturwert und die neu ermittelte Häufigkeitsverteilung zur Bestimmung der Radgeschwindigkeiten verwendet werden.

**5.** Verfahren nach Anspruch 3, **dadurch gekennzeichnet, dass** nach Bestimmung einer vorgegebenen Anzahl von Quotienten die Anzahl des Quotienten mit den kleinsten Wert oder die Anzahl der Quotienten mit dem größten Wert zahlenmäßig verändert wird.

**6.** Verfahren nach Anspruch 5, **dadurch gekennzeichnet**, die Anzahl des Quotienten mit dem kleinsten Wert und die Anzahl des Quotienten mit dem größten Wert abwechselnd um den gleichen Wert verringert wird.

**7.** Verfahren nach einem der Ansprüche 2 und 3, **dadurch gekennzeichnet, dass** aus den in der Häufigkeitsverteilung gespeicherten Quotienten ein Mittelwert gebildet wird, wobei dieser mit einem Grenzwert verglichen und bei Unterschreitung des Grenzwertes auf eine annähernde Geradeausfahrt des Fahrzeuges erkannt wird.

**Claims**

**1.** Method for predictively determining a driving corridor of a motor vehicle for an automatic distance regulation and control system, wherein the future driving corridor is calculated from the wheel speeds of the vehicle wheels of one axle of the motor vehicle, with a variable tyre correction factor being applied to at least the wheel speed of one vehicle wheel before the driving corridor is determined, **characterised in that** in order to determine the correction factor the wheel speeds of the wheels of the axle over a predefined distance are calculated and a quotient is formed from the thus formed wheel speeds of the wheels.

**2.** Method according to claim 1, **characterised in that** the tyre correction factor is determined only when the motor vehicle is moving forward in an approximately straight line.

**3.** Method according to claim 1 or 2, **characterised in that** a plurality of quotients calculated over a certain period of time are checked with regard to the frequency of occurrence of similar values of the quotients, with the number of quotients each having a similar value being counted and stored in a frequency distribution.

**4.** Method according to claim 3, **characterised in that** upon completion of a new driving cycle the frequency distribution is calculated from the stored correction value, with the stored correction value and the newly calculated frequency distribution being used for determining the wheel speeds.

**5.** Method according to claim 3, **characterised in that** following determination of a predefined number of quotients the number of the quotient with the smallest value or the number of quotients with the largest value is changed numerically.

**6.** Method according to claim 5, **characterised in that** the number of the quotient with the smallest value and the number of the quotient with the largest value is reduced alternately by the same value.

**7.** Method according to one of claims 2 and 3, **characterised in that** an average value is formed from the quotients stored in the frequency distribution, with said average value being compared with a limit value and if it is less than the limit value this being interpreted as indicating that the motor vehicle is moving forward in an approximately straight line.

**Revendications**

**1.** Procédé pour la détermination prévisionnelle d'une voie de marche d'un véhicule automobile pour un système automatique de régulation et de contrôle de la distance, dans lequel la voie future est déterminée sur la base des vitesses des roues d'un essieu du véhicule, au moins la vitesse d'une roue du véhicule étant chargée avec un coefficient de correction de pneumatique variable avant la détermination de la voie de marche,
**caractérisé en ce que,** pour la détermination du coefficient de correction, les vitesses des roues de l'essieu sont déterminées sur la base d'une distance parcourue prédéterminée et un quotient est formé à partir des vitesse des roues qui sont ainsi formées.

**2.** Procédé selon la revendication 1, **caractérisé en ce que** le coefficient de correction de pneumatique n'est déterminé que lorsque le véhicule marche approximativement en ligne droite.

**3.** Procédé selon la revendication 1 ou 2, **caractérisé en ce que** plusieurs quotients obtenus sur une période déterminée sont soumis à un contrôle de la fréquence d'apparition de valeurs similaires des quotients, le nombre des quotients d'une valeur similaire étant compté et enregistré dans une distribution des fréquences.

**4.** Procédé selon la revendication 3, **caractérisé en ce qu'**après l'achèvement d'un nouveau cycle de marche, la distribution des fréquences est déterminée sur la base de l'indice de correction enregistré, l'indice de correction enregistré et la distribution des fréquences nouvellement déterminée étant utilisés pour la détermination des vitesses des roues.

**5.** Procédé selon la revendication 3, **caractérisé en ce qu'**après la détermination d'un nombre prédéterminé de quotients, le nombre des quotients de la plus petite valeur ou le nombre des quotients de la plus grande valeur est modifié numériquement.

**6.** Procédé selon la revendication 5, **caractérisé en ce que** le nombre des quotients de la plus petite valeur et le nombre des quotients de la plus grande valeur sont réduits de la même valeur en alternance.

**7.** Procédé selon une des revendications 2 et 3, **caractérisé en ce qu'**une valeur moyenne est formée à partir des quotients enregistrés dans la distribution des fréquences, cette valeur moyenne étant comparée à une valeur limite et étant identifiée comme indication d'une marche approximativement en ligne droite du véhicule lorsqu'elle est inférieure à la valeur limite.

**Fig. 1**

Fig. 2

Anzahl

Häufigkeitsverteilung

K₁

K₅

Klasse

## Fig. 3

Anzahl

Standardabweichung

Klasse

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19749306 A1
- WO 9910747 A